# EUROPÄISCHE PATENTSCHRIFT

(11) **EP 1 685 994 B1**
(45) Veröffentlichungstag und Bekanntmachung des Hinweises auf die Patenterteilung: **10.08.2016**
(21) Anmeldenummer: 06001956.9
(22) Anmeldetag: 31.01.2006
(51) Int. Cl.: B60J 5/04

(54) **Kraftfahrzeug ohne B-Säule und mit einer vorderen und einer hinteren Seitentür**
Vehicle without B-pillar and with a front and a rear side door
Véhicule sans montant central et avec une porte latérale avant et une porte latérale arrière

(30) Priorität: 01.02.2005 DE 102005004575
(43) Veröffentlichungstag der Anmeldung: 02.08.2006
(73) Patentinhaber: Bayerische Motoren Werke Aktiengesellschaft, 80809 München (DE)
(72) Erfinder: Peis, Reinhard, 85406 Zolling (DE); Aigner, Johann, 85375 Neufahrn (DE); Mann, Bruno, 85464 Finsing (DE); Bursell, Robert, RG4 7DL Reading (GB)

(56) Entgegenhaltungen:
- EP-A1- 1 068 970
- WO-A2-2004/028884
- DE-A1- 10 119 131
- DE-B3- 10 346 707
- DE-B3-102004 013 357
- US-A1- 2005 156 451

## Beschreibung

Die Erfindung betrifft ein Kraftfahrzeug mit einer vorderen und einer hinteren Seitentür nach dem Oberbegriff des Patentanspruchs 1. Ein solches Kraftfahrzeug ist aus DE10019131 A1 benannt.

Aus der DE 600 09 986 T2 ist ein Kraftfahrzeug bekannt, bei dem eine vordere und eine hintere Seitentür eine seitliche Türausschnittsöffnung in einer Karosserie des Kraftfahrzeugs verschließen können. Die Karosserie des Kraftfahrzeugs weist keine B-Säulen auf. Während die vordere Seitentür konventionell mit ihrem - in Fahrtrichtung gesehen - vorderen Abschnitt im vorderen Bereich der Türausschnittsöffnung an der Karosserie angelenkt ist, ist die hintere Tür mit ihrem hinteren Abschnitt im hinteren Bereich der Türausschnittsöffnung an die Karosserie angelenkt. Die vordere und die hintere Seitentür öffnen also zueinander in entgegen gesetzter Richtung.

Mazda bietet seit 2004 in Deutschland das Fahrzeugmodell RX-8 an, das eine derartige vordere und hintere Seitentür aufweist. Dabei bilden die geschlossene vordere und die geschlossene hintere Seitentür einen Überlappungsbereich, sodass die hintere Seitentür nur geöffnet und geschlossen werden kann, wenn die vordere Seitentür geöffnet ist. Zudem weisen beide Seitentüren aufgrund gesetzlicher Vorgaben eine sogenannte Zwischenraste auf. Beim Schließen fällt jede Seitentür zunächst in die Zwischenraste, bevor das eigentliche Türschloss die Seitentür in der vollständig geschlossenen Stellung verriegelt. Die Zwischenraste verhindert, dass eine Seitentür, die fast geschlossen ist, unkontrolliert wieder aufgehen kann. Um eine Seitentür aus der Zwischenraste heraus wieder öffnen zu können, muss ein Türgriff betätigt werden.

Aufgabe der Erfindung ist es, ein Kraftfahrzeug mit einer vorderen und einer hinteren schwenkbaren Seitentür zu schaffen, die sich wie beim Mazda RX-8 sequentiell öffnen lassen, die so gestaltet sind, dass sie auch bei fehlerhafter Bedienung nicht beschädigt werden können. Eine fehlerhafte Bedienung liegt beispielsweise vor, wenn die hintere Seitentür geschlossen wird, wenn die vordere Seitentür sich bereits in der geschlossenen Stellung befindet.

Diese Aufgabe wird mit einem Kraftfahrzeug mit einer vorderen und einer hinteren schwenkbaren Seitentür mit den Merkmalen des Patentanspruchs 1 gelöst.

Die vordere und die hintere Seitentür weisen in ihren Verschwenkbereichen einen Kollisionsbereich auf, in dem sie sich berühren können. Dieser Kollisionsbereich ist aufgrund des gewünschten Überlappungsbereichs, den die beiden Seitentüren in der geschlossenen Stellung bilden, unvermeidbar. Kerngedanke der Erfindung ist es, eine Beschädigung der Seitentüren zu vermeiden, indem einerseits der Kollisionsbereich möglichst klein gehalten wird, sodass die Wahrscheinlichkeit einer Kollision gering ist, und indem andererseits Maßnahmen ergriffen werden, die bei einer Kollision eine Beschädigung möglichst vermeiden.

Gemäß Patentanspruch 1 ist die von der Fahrzeugaußenseite sichtbare Fuge zwischen der vorderen und der hinteren Seitentür oberhalb der Türbrüstung breiter als zumindest 7 mm. Die Fuge wird durch den Abstand zwischen den beiden Fensterrahmen der Seitentüren bzw. bei Seitentüren ohne Fensterrahmen zwischen den beiden Seitenscheiben der Seitentüren gebildet. Normalerweise weisen konventionelle Seitentüren oberhalb der Türbrüstung eine Fuge mit einer Breite von 5 mm oder weniger auf. Durch die breitere Fuge ist der Kollisionsbereich deutlich kleiner als bei einer schmalen Fuge. Damit verringert sich die Wahrscheinlichkeit einer Kollision und damit die Wahrscheinlichkeit einer Beschädigung der Seitentüren.

Üblicherweise sind die Seitentüren im Querschnitt gesehen zum Fahrzeugdach hin nach innen geneigt. Dadurch ist der Kollisionsbereich der einander zugewandten oberen Ecken der Seitentüren besonders groß. Alternativ ist die vordere Tür an ihrer oberen hinteren Ecke schräg beschnitten, sodass in diesem Bereich der Kollisionsbereich deutlich kleiner ist als bei Seitentüren ohne Beschnitt.

Die hintere Seitentür im vorderen an die vordere Seitentür angrenzenden Bereich ihrer Außenseite oberhalb der Türbrüstung weist eine schadensunempfindliche Blende zumindest in dem Bereich auf, in dem ein Kontakt mit der vorderen Seitentür möglich ist. Diese Blende besteht beispielsweise aus Gummi oder einem weichen thermoplastischen Kunststoff, der einerseits bei einer Berührung mit der vorderen Seitentür selber nicht beschädigt wird und andererseits eine Beschädigung der Seitentüren verhindert. Bevorzugt ist die Blende so gestaltet, dass der Kontaktbereich mit der vorderen Seitentür im Falle einer Kollision möglichst groß und möglichst flächig ist.

Die hintere Seitentür im vorderen an die vordere Seitentür angrenzenden Bereich ihrer Innenseite oberhalb der Türbrüstung weist eine schadensunempfindliche Blende zumindest in dem Bereich auf, in dem ein Kontakt mit der vorderen Seitentür möglich ist, wenn die hintere Seitentür geschlossen wird und die vordere Seitentür bereits geschlossen ist. Auch diese Blende besteht beispielsweise aus Gummi oder einem weichen thermoplastischen Kunststoff, der einerseits bei einer Berührung mit der vorderen Seitentür selber nicht beschädigt wird und andererseits eine Beschädigung der Seitentüren verhindert. Bevorzugt ist die Blende so gestaltet, dass der Kontaktbereich mit der vorderen Seitentür im Falle einer Kollision möglichst groß und möglichst flächig ist.

Die die hintere Seitentür im vorderen an die vordere Seitentür angrenzenden Bereich ihrer Innenseite unterhalb der Türbrüstung weist eine Türverkleidung auf, die so gestaltet ist, dass sie sich flächig an der vorderen Seitentür abstützen kann, wenn diese bereits geschlossen ist und die hintere Seitentür geschlossen wird. Wie bereits die oben beschriebenen Blenden dient auch die so gestaltete Türverkleidung dazu, mögliche Beschädigungen an den Seitentüren zu verhindern, wenn es schon zu einer Kollision der beiden Seitentüren kommt. Entsprechend ist auch das Material der Türverkleidung zumindest in dem möglichen Kontaktbereich bevorzugt relativ weich und schadensunempfindlich zu wählen, um Beschädigungen der Türverkleidung und der vorderen Seitentür bei einer Kollision zu vermeiden.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine perspektivische Ansicht eines Kraftfahrzeugs mit einer vorderen und hinteren Seitentür, die eine durchgehende Türausschnittsöffnung in einer Karosserie ohne B-Säule verschließen können,
- Fig. 2: einen Höhenschnitt durch den vorderen Randbereich der in Fig. 1 dargestellten hinteren Seitentür oberhalb der Türbrüstung entlang der Schnittlinie II - II und
- Fig. 3: einen Höhenschnitt durch den vorderen Randbereich der in Fig. 1 dargestellten hinteren Seitentür unterhalb der Türbrüstung entlang der Schnittlinie III - III.

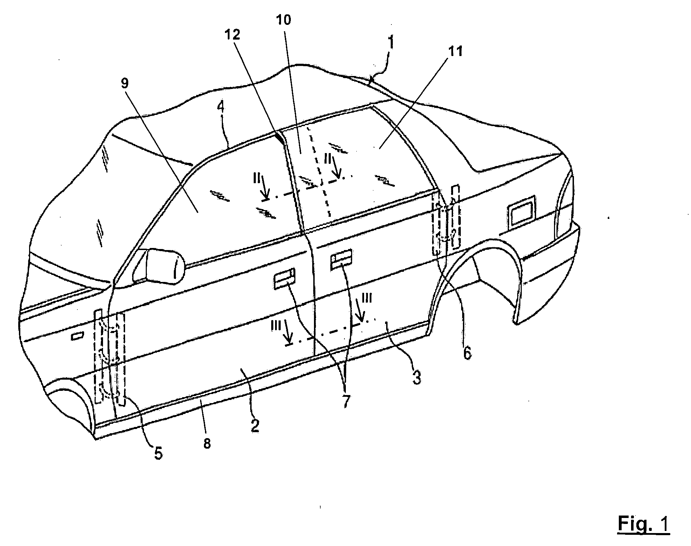

In Fig. 1 ist eine Limousine 1 dargestellt, die eine große Türausschnittsöffnung aufweist, die mit einer vorderen und einer hinteren Seitentür 2 und 3 verschlossen ist. Die Türausschnittsöffnung wird durch keine B-Säule unterteilt. Die vordere Seitentür 2 ist mit ihrem vorderen Abschnitt über ein vorderes Scharnier 5 im vorderen Bereich der Türausschnittsöffnung schwenkbar an die Karosserie der Limousine angelenkt, während die hintere Seitentür 3 mit ihrem hinteren Abschnitt über ein hinteres Scharnier 6 im hinteren Bereich der Türausschnittsöffnung an die Karosserie angelenkt ist. Die beiden Seitentüren 2 und 3 öffnen sich also zueinander in entgegengesetzter Richtung. Entsprechend befindet sich ein Türgriff 7 der vorderen Seitentür 2 im hinteren Bereich der vorderen Seitentür 2, während sich ein Türgriff 7 der hinteren Seitentür 3 im vorderen Bereich befindet.

In der geschlossenen Stellung bilden die beiden Seitentüren 2 und 3 einen Überlappungsbereich, wobei von außen gesehen die vordere Seitentür 2 die hintere Seitentür 3 überlappt. Zum Öffnen der hinteren Seitentür 3 muss also immer zuerst die vordere Seitentür 2 geöffnet werden. Beim Schließen muss umgekehrt immer die hintere Seitentür 3 geschlossen werden, bevor die vordere Seitentür 2 geschlossen werden kann.

Die vordere Seitentür 2 weist keinen Fensterrahmen auf. Sie kann sich also in der geschlossenen Stellung nur am Seitenschweller 8, der die Türausschnittsöffnung unten begrenzt, und an der hinteren Seitentür 3 abstützen. Die verlagerbare Fensterscheibe 9 der vorderen Seitentür 2 liegt zwar in der geschlossenen Stellung oben an einer Dichtung, die an einem Dachseitenrahmen 4 der Karosserie angebracht ist, und an der hinteren Seitentür 3 an, sie kann aber keine Kräfte übertragen.

Da die Limousine 1 keine B-Säulen aufweist, sind zusätzliche Maßnahmen erforderlich, um eine definierte Schließstellung der vorderen Seitentür sicherstellen zu können. Dazu könnte theoretisch die vordere Seitentür 2 mit erheblichem Aufwand extrem steif ausgeführt werden, was aber aus Kosten- und Gewichtsgründen nicht sinnvoll ist. Eine wesentlich einfachere Lösung wäre es, wenn sich die vordere Seitentür 2 in der geschlossenen Stellung an der hinteren Seitentür 3 abstützen kann. Dies setzt allerdings voraus, dass der vordere Abschnitt der hinteren Seitentür 3 entsprechend steif ist. Deshalb erstreckt sich die tragende Struktur der hinteren Seitentür 3 im an die vordere Seitentür 2 angrenzenden Bereich vom Seitenschweller 8 bis zum Dachseitenrahmen 4. Sie bildet quasi eine in die hintere Seitentür 3 integrierte B-Säule 10.

Auch die hintere Seitentür 3 weist keinen Fensterrahmen auf. Die Fensterscheibe 11 der hinteren Seitentür 3 ist im Gegensatz zur Fensterscheibe 9 der vorderen Seitentür 2 nicht verlagerbar und erstreckt sich von der Fahrzeugaußenseite gesehen über die in die hintere Seitentür 3 integrierte B-Säule 10, sodass diese verdeckt ist.

Aufgrund des Überlappungsbereichs zwischen der geschlossenen vorderen und der geschlossenen hinteren Seitentür 2 und 3 ergibt sich ein Kollisionsbereich, in dem sich die beiden Seitentüren 2 und 3 beim Verschwenken berühren können. Eine solche Kollision kann zu einer Beschädigung zumindest einer der beiden Seitentüren 2 und 3 führen. Um den Kollisionsbereich möglichst klein zu halten, weist die von der Fahrzeugaußenseite sichtbare Fuge oberhalb der Türbrüstung zwischen der vorderen und der hinteren geschlossenen Seitentür 2 und 3 eine Breite von 10 mm auf. Da beide Seitentüren 2 und 3 keinen Fensterrahmen aufweisen, entspricht die Breite der Fuge dem Abstand der Seitenscheiben 9 und 11 der beiden Seitentüren 2 und 3 zueinander. Damit ist die Fuge deutlich breiter als bei gängigen Fahrzeugen mit konventionellen Seitentüren, die üblicherweise nur eine Fuge von etwa 5 mm oberhalb der Türbrüstung aufweisen. Dadurch ist der mögliche Kollisionsbereich deutlich kleiner als bei einer schmaleren Fuge. Zusätzlich ist die Seitenscheibe 9 der vorderen Seitentür 2 an ihrer oberen - in Fahrtrichtung gesehen - hinteren Ecke schräg abgeschnitten. Beide Seitentüren 2 und 3 sind nach oben innen zum Fahrzeugdach hin geneigt. Dadurch bilden die beiden aneinander grenzenden oberen Ecken der Fensterscheiben 9 und 11 der vorderen und der hinteren Seitentür 2 und 3 einen besonders großen Kollisionsbereich. Durch den Beschnitt 12 der hinteren Ecke der Seitenscheibe 9 wird der Kollisionsbereich mit der Seitenscheibe 11 der hinteren Seitentür 3 wesentlich verkleinert, sodass die Gefahr einer versehentlichen Beschädigung der Seitenscheiben 9 und 11 sich erheblich verringert. In Verbindung mit der Fugenbreite von 10 mm zwischen den beiden Seitenscheiben 9 und 11 ist sogar ein Öffnen der Schließen der beiden Seitentüren 2 und 3 ohne Kollision der Seitenscheiben 9 und 11 sichergestellt.

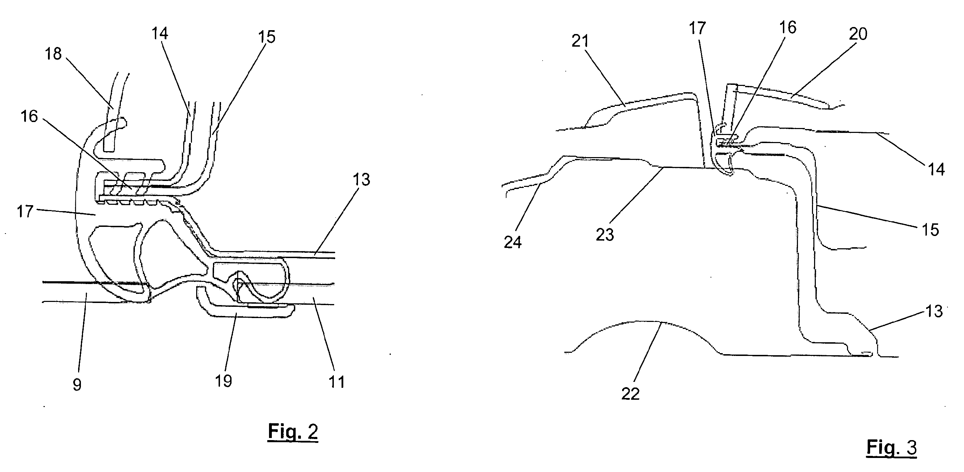

Trotz dieser Maßnahmen kann eine Kollision der vorderen Seitentür 2 mit der hinteren Seitentür 3 nicht vollständig ausgeschlossen werden, zum Beispiel bei gleichzeitigem, gegenläufigem Öffnen oder Schließen beider Seitentüren 2, 3. Daher sind die Seitentüren 2 und 3 so gestaltet, dass sie - wenn es schon zu einer Kollision kommt - möglichst nicht beschädigt werden. Dazu ist auf der nicht verlagerbaren Fensterscheibe 11 der hinteren Seitentür 3 im vorderen äußeren Bereich über die gesamte Höhe der Fensterscheibe 11 eine Blende 19 aus einem weichen thermoplastischen Kunststoff aufgeklebt, die in Fahrtrichtung gesehen sogar nach vorne über die Fensterscheibe 11 übersteht. Diese Blende 19 ist im Höhenschnitt durch die vordere und hintere Seitentür 2 und 3 oberhalb der Türbrüstung entlang der Schnittlinie II - II in Fig. 2 gut erkennbar. Die Blende 19 verhindert, dass sich die beiden Fensterscheiben 9 und 11 direkt berühren können und verhindert so Beschädigungen der Fensterscheiben 9 und 11.

In Fig. 2 ist auch ein Teil der in die hintere Seitentür 3 integrierten B-Säule 10 zu sehen, die in Schalenbauweise aus einer Blechaußenschale 13, einer Blechinnenschale 14 und einem Verstärkungsblech 15 besteht, das zwischen der Blechinnenschale 14 und der Blechaußenschale 15 angeordnet ist. Auf den vorderen Verbindungsflansch 16'zwischen Blechaußenschale 13, Blechinnenschale 14 und Verstärkungsblech 15 ist eine Türdichtung 17 aufgesteckt, die die vordere und die hintere geschlossene Seitentür 2 und 3 zueinander abdichtet. Auf der dem Fahrzeuginnenraum zugewandten Seite der in die hintere Seitentür integrierten B-Säule 10 ist eine weitere Blende 18 aus einem gummiartigen Material im der vorderen Seitentür 2 zugewandten Bereich angebracht. Wenn nun versehentlich die hintere Seitentür 3 geschlossen wird, und die vordere Seitentür 2 sich bereits in ihrer geschlossenen Stellung befindet, prallt die hintere Seitentür 3 oberhalb der Brüstungslinie mit der weichen Blende 18 auf die vordere Seitentür 2. Die Blende 18 dämpft den Aufprall und verhindert eine Beschädigung der beiden Seitentüren 2 und 3 aufgrund ihrer Weichheit.

Die beiden Blenden 19 und 18 schützen die beiden Seitentüren 2 und 3 vor Beschädigungen bei einer Kollision vor allem im Bereich oberhalb der Brüstungslinie. Aber auch unterhalb der Brüstungslinie weisen die Seitentüren 2 und 3 Maßnahmen zum Schutz bei einer Kollision auf, die am besten anhand des in Fig. 3 dargestellten Höhenschnitts durch die vordere und hintere Seitentür 2 und 3 entlang der Schnittlinie III - III erläutert werden können.

Unterhalb der Türbrüstung wird der Türkörper der hinteren Seitentür 3 gebildet durch ein Türaußenblech 13, das oberhalb der Türbrüstung einteilig die Blechaußenschale der integrierten B-Säule 10 bildet, durch ein Türinnenblech 14, das oberhalb der Türbrüstung einteilig die Blechinnenschale der integrierten B-Säule 10 bildet, und durch ein Verstärkungsblech 15, das oberhalb der Türbrüstung einteilig das Verstärkungsblech der integrierten B-Säule 10 bildet. Auch der Türkörper der vorderen Seitentür 2 wird in Schalenbauweise durch ein Türaußenblech 22, ein Türinnenblech 23 und ein Verstärkungsblech 24 gebildet. Beide Seitentüren 2 und 3 sind auf ihrer dem Fahrzeuginnenraum zugewandten Seite jeweils mit einer Türverkleidung 20 und 21 verkleidet. Die Türverkleidung 20 der hinteren Seitentür 3 ist im - in Fahrtrichtung gesehen - vorderen Bereich so gestaltet, dass sie eine flächige Anlagefläche bildet, mit der die hintere Seitentür 3 beim Schließen auf die vordere Seitentür 2 aufprallen kann, wenn diese sich bereits in der geschlossenen Stellung befindet. Aufgrund der von der Türverkleidung 20 gebildeten flächigen Kontaktfläche kann eine Beschädigung der Seitentüren 2 und 3 vermieden werden. Die mögliche Kontaktfläche der Türverkleidung 20 besteht entsprechend aus einem weichen, schadensunempfindlichen Material. Durch die geometrische Gestaltung der Kontaktfläche der Türverkleidung wird zudem ein Einklemmen einer Zunge eines Gurtschlosses vermieden. Analog dazu ist die Türverkleidung 21 der vorderen Seitentür 2 so gestaltet, dass sie eine Kontaktfläche mit der hinteren Seitentür 3 bildet, wenn diese sich in einer fast geschlossenen Stellung befindet und die vordere Seitentür 2 geschlossen wird.

Durch alle diese Maßnahmen kann einerseits der Kollisionsbereich zwischen der vorderen und der hinteren Seitentür 2 und 3 relativ klein gehalten werden, andererseits wird eine Beschädigung der Seitentüren 2 und 3 vermieden, wenn es dennoch zu einer Kollision kommt.

## Patentansprüche

1. Kraftfahrzeug mit einer - in Fahrtrichtung gesehen - vorderen und einer hinteren Seitentür (2, 3) zum Verschließen einer seitlichen durchgehenden Türausschnittsöffnung in einer Karosserie des Kraftfahrzeugs, die keine B-Säule aufweist, wobei die vordere Seitentür (2) mit ihrem vorderen Abschnitt im vorderen Bereich der Türausschnittsöffnung an der Karosserie angelenkt ist, während die hintere Seitentür (3) mit ihrem hinteren Abschnitt im hinteren Bereich der Türausschnittsöffnung an der Karosserie angelenkt ist, wobei die geschlossene vordere Seitentür (2) die geschlossene hintere Seitentür (3) von der Fahrzeugaußenseite gesehen überlappt, wobei die Fuge oberhalb der Türbrüstung zwischen vorderer und hinterer Seitentür (2, 3) breiter als zumindest 7 mm ist, **dadurch gekennzeichnet, dass** die vordere und hintere Seitentür (2, 3) jeweils keinen Fensterrahmen aufweisen und nach oben innen zum Fahrzeugdach hin geneigt sind, wobei die Fensterscheibe (9) der vordere Seitentür (2) an ihrer oberen hinteren Ecke einen Beschnitt (12) aufweist, sodass der Kollisionsbereich der Fensterscheibe (9) der vorderen Seitentür (2) mit der daran angrenzenden Fensterscheibe (11) der hinteren Seitentür (3) wesentlich verkleinert ist.

## Claims

1. A motor vehicle with a front side door and a rear side door (2, 3), seen in the direction of travel, for closing a lateral continuous door cut-out opening in a body of the motor vehicle which does not have a B-pillar, wherein the front side door (2) is linked to the body by its front portion in the front region of the door cut-out opening, while the rear side door (3) is linked to the body by its rear portion in the rear region of the door cut-out opening, wherein the closed front side door (2) overlaps the closed rear side door (3), seen from the outside of the vehicle, wherein the join above the door sill between the front side door and the rear side door (2, 3) is wider than at least 7 mm, **characterised in that** the front side door and the rear side door (2, 3) do not have a respective window frame and are inclined upwards on the inside towards the vehicle roof, wherein the window (9) of the front side door (2) has a cut (12) in its upper rear corner, so that the collision zone of the window (9) of the front side door (2) with the adjoining window (11) of the rear side door (3) is substantially reduced.

## Revendications

1. Véhicule comprenant une porte latérale avant et une porte latérale arrière (2, 3) dans la direction de déplacement pour permettre de fermer une ouverture de découpe de porte latérale ininterrompue de la carrosserie du véhicule qui ne comporte pas de colonne médiane, la porte latérale avant (2) étant articulée sur la carrosserie par son segment avant dans la zone avant de l'ouverture de découpe de porte, tandis que la porte latérale arrière (3) est articulée sur la carrosserie par son segment arrière, dans la zone arrière de l'ouverture de découpe de porte, la porte latérale avant (2) fermée chevauchant la porte latérale arrière (3) fermée considérée sur la face externe du véhicule, et le joint au-dessus de l'appui de porte entre la porte latérale avant et la porte latérale arrière (2, 3) étant plus large qu'au moins 7 mm,
**caractérisé en ce que**
la porte latérale avant et la porte latérale arrière (2, 3) ne comportent chacune pas de cadre de fenêtre et sont inclinées intérieurement vers le haut vers le toit du véhicule, la vitre de fenêtre (9) de la porte latérale avant (2) comportant, au niveau de son coin supérieur arrière une découpe (12) de sorte que la zone de contact de la vitre de fenêtre (9) de la porte latérale avant et de la vitre de fenêtre (11) de la porte latérale arrière (3) voisine de celle-ci soit essentiellement diminuée.
